(19) Europäisches Patentamt
European Patent Office
Office européen des brevets

(11) Publication number: **0 133 920**
**A1**

(12) **EUROPEAN PATENT APPLICATION**

(21) Application number: **84107787.8**

(22) Date of filing: **04.07.84**

(51) Int. Cl.[4]: **C 02 F 1/76**, C 02 F 1/46

(30) Priority: **05.07.83 US 510788**

(43) Date of publication of application: **13.03.85**
**Bulletin 85/11**

(84) Designated Contracting States: **BE DE FR NL**

(71) Applicant: **OLIN CORPORATION, 275 South Winchester Avenue, New Haven, Connecticut 06511 (US)**

(72) Inventor: **Capuano, Italo Antonio, 385 Augusta Drive, Orange Connecticut 06477 (US)**

(74) Representative: **Dr. Elisabeth Jung Dr. Jürgen Schirdewahn Dr. Gerhard Schmitt-Nilson Dr. Gerhard B. Hagen Dipl.-Ing. Peter Hirsch, P.O. Box 40 14 68, D-8000 München 40 (DE)**

(54) **Automatically controlled system for sanitizing water bodies.**

(57) A method of sanitizing a water body in a container having a recirculation system for continuously recirculating water from and to the container is described which comprises contacting an electrochemical available halogen sensor with the recirculating water. The available halogen concentration in the recirculating water is measured and displayed on a control means and a predetermined value for the available halogen concentration is established on the control means. The control means is connected to an electrolysis means for electrolytically producing an available halogen. The electrolysis means is activated to produce an available halogen when the measured available halogen concentration is below the predetermined value. The available halogen is added to sanitize said recirculating water; and the sanitized water returned to the container.

The method and the novel apparatus for employing the method provide a control system for hot tubs, spas, and swimming pools in which the production and addition of the available halogen is based on the available halogen demand of the water body. Accurately controlled available halogen concentrations are automatically provided and substantial energy and cost savings are realized as the electrolytic cell is only operated when the available halogen concentration is being depleted.

EP 0 133 920 A1

# AUTOMATICALLY CONTROLLED SYSTEM FOR SANITIZING WATER BODIES

The present invention relates to the sanitization of water supplies, such as hot tubs, spas, and swimming pools. More particularly this invention relates to the automatic production and control of available halogen concentrations employed in sanitizing water supplies.

In the treatment of water supplies for purposes of disinfecting and sanitizing, a commonly used procedure is the addition of an available halogen or an available halogen compound into the body of the water to be treated. For example, in sanitizing the water in a swimming pool, available halogen compounds in granular or compressed forms are frequently added directly to the water, or placed in a skimmer or in dissolving baskets around the pool or in a dispensing device which is connected to the water recirculating system.

The available halogen or available halogen compound may also be generated on site, i.e., produced by an electrochemical device such as an electrolytic cell. One such electrochemical device is described in U.S. Patent No. 4,100,052, issued July 11, 1978, to N. W. Stillman. This patent describes an electrolytic cell which is placed directly in the circulation system of the water body to be treated. The water supply is

required to contain low concentrations of a halogen salt which is electrolyzed directly to produce the available halogen compound required to sanitize the water supply. Operation of the electrolytic cell is controlled by a timing device and the cell is operated non-continuously to prevent accumulation of scale deposits on the electrode surface. In addition to requiring the use of salt water, the electrolytic cell of U.S. Patent No. 4,100,052 operates at relatively low current efficiencies.

U.S. Patent No. 4,381,240, issued April 26, 1983, to T. V. Russell describes a swimming pool water conditioning system in which the electrolytic cell is separate from the circulation system and indirectly feeds chlorine gas produced by the electrolysis of a hydrochloric acid solution. Operation of the cell is controlled by a timing device.

The amounts of available halogen required in treating a water supply such as a swimming pool varies considerably and is effected by a number of factors including the amount of sunlight present, and the number of swimmers using the pool. Thus the use of electrochemical devices which depend on timing sequences for their operation will frequently provide an inadequate amount of the available halogen agent required to suitably sanitize the water supply being treated; or an excessive amount when the pool is not being used.

In addition, the sanitation of hot tubs and spas is particularly difficult as the elevated water temperatures employed and increased amounts of body secretions such as oils and perspiration produced, rapidly deplete the available halogen concentration.

Increasing the available halogen concentration using the presently available sanitation methods frequently results in excessive amounts of available halogen which irritate the eyes and skin.

There is a need therefore for an electrochemical system for sanitizing water bodies in which automatic control is provided based on the available halogen demands of the water being treated. In addition, electrochemical halogenation devices are required having improved current efficiencies and lower operating costs.

It is an object of the present invention to provide an electrochemical system for sanitizing water bodies which is highly responsive to changes in available halogen demand.

Another object of the present invention is to provide electrochemical apparatus which provides carefully controlled levels of an available halogen sanitizing agent.

An additional object of the present invention is to provide an electrochemical system for sanitizing water bodies which has lower operating costs.

These and other objects of the present invention are accomplished in a method of sanitizing a water body in a container having a recirculation system for continuously recirculating water from and to said container which comprises:

a) contacting an electrochemical available halogen sensor with said recirculating water;
b) measuring said available halogen concentration in said recirculating water;
c) displaying said available halogen concentration on a control means;

d) establishing on the control means a predetermined value for the available halogen concentration;

e) connecting said control means to an electrolysis means for electrolytically producing an available halogen;

f) activating said electrolysis means to produce said available halogen when said measured available halogen concentration is below said predetermined value;

g) adding said available halogen to said recirculating water; and

h) returning said halogenated recirculating water to said container.

FIGURE 1 is a diagrammatic plan of a swimming pool circulation system incorporating the apparatus and method of the present invention.

FIGURE 2 is a front view of one embodiment of an apparatus suitable for measuring available halogen concentrations in the method of the present invention.

FIGURE 3 illustrates one embodiment of an electrochemical cell suitable for use in the present invention.

In the diagrammatic plan of FIGURE 1, a pump 54 is connected at its low pressure or vacuum side to tank 50 by conduit 52. Also connected to conduit 52 is available halogen measuring unit 10. A stream of water from tank 50 is circulated through available halogen measuring unit 10 and the available halogen concentration determined and recorded on available halogen control unit 56. Available halogen control unit 56 secures power from A.C. power source 72 and is connected to D.C. power source 74. When the available halogen concentration is less than desired, as

established, for example, by at least one set point on available halogen control unit 56, electric current flows between available halogen control unit 56 and D.C. power source 74. D.C. power source 74 activates electrolytic cell 58 by applying an electric current to anode 60 immersed in an electrolyte suitable for producing an available halogen agent during the electrolysis which results when the electric current passes between anode 60 and cathode 62. The available halogen agent produced is evacuated from electrolytic cell 58 through conduit 64 and fed to the stream of water passing through conduit 52 and pump 54. From pump 54, the stream treated with the available halogen agent is circulated through conduit 70 to filter 66, and if desired, through heater 68, and returned to tank 50 by conduit 70. When the available halogen concentration is at or above the upper set point on available halogen control unit 56, transmission of electric current to D.C. power source 74 is stopped and electrolysis in cell 58 ceases.

FIGURE 2 illustrates an apparatus suitable for use in measuring available halogen concentration having buffer solution compartment 12, meter compartment 14, and electrode compartment 16. Sensing electrode 18 has an upper portion 17 and a lower portion 19. Upper portion 17 is positioned in meter compartment 14 and includes contact 22. Lower portion 19 is positioned in electrode compartment 16 and comprises porous conductive material 20. Electrode wire 21 provides the electrical connection between porous conductive material 20 and contact 22. Line 34 conveys buffer solution from compartment 12 to sensing electrode 18. Buffer solution can be added to compartment 12 through inlet 36. Meter 24 is connected to sensing electrode 18 by wire 23

attached to contact 22. Meter 24 is also connected to A.C. power source 72 and D.C. power source 74. Upper set point 25 and lower set point 27 on meter 24 establish the desired range of available halogen concentration. When upper set point 25 is reached or exceeded, a relay (not shown) interrupts the flow of current to D.C. power source 74 and electrolysis in electrolytic cell 62 is discontinued. Should the available halogen concentration fall below that of lower set point 27, an alarm (not shown) may be activated. Reference electrode 26 has housing 44 positioned in meter compartment 14 and wire spiral 46 positioned in electrode compartment 16. Inlet 38 in electrode compartment 16 permits the introduction of an aqueous solution whose available halogen concentration is to be measured by sensing electrode 18. Flow rate control valve 42 regulates the flow of aqueous solution into electrode compartment 16. The aqueous solution then contacts sensing electrode 18 and reference electrode 26 and leaves compartment 16 through outlet 40.

FIGURE 3 represents one embodiment of an electrolytic cell suitable for use in the present invention as a replacement for electrolytic cell 58, in which electrolytic cell 80 is comprised of anode compartment 82 and cathode compartment 84 separated by membrane 83. Anode 85 is positioned in anode compartment 82, and cathode 86 is positioned in cathode compartment 84. Opening 81 permits the introduction of the electrolyte and outlet 87 removes the available halogen agent produced during electrolysis from anode compartment 82. Water passing through conduit 52 contacts pH electrode 92 connected to indicator-controller 94. When the pH of the water is below the desired range, valve 96 allows water to enter

electrolytic cell 80. The water passes through cathode compartment 84 and removes a portion of the alkali metal hydroxide produced to raise the pH. The treated water is removed from cathode compartment 84 through outlet 89 and is returned to tank 50. Hydrogen gas produced in cathode compartment 84 may be vented through opening 90.

More in detail, in the novel process of the present invention, water from tank 50 is circulated either directly as shown in FIGURE 1, or indirectly, to a suitable available halogen measuring unit such as that illustrated in FIGURE 2. Available halogen in the water is present as a hypohalite ion whose concentration is determined by contacting the water with a sensing electrode. The reaction of hypohalite ions, present in the water, at the sensing electrode reduces the hypohalite ions to halide ions and is expressed by equation (1) as follows:

$$OX^- + 2H^+ + 2e \longrightarrow X^- + H_2O, \qquad (1)$$

where X is Cl, Br or I. The potential generated by this reaction is measured by the electrode and recorded, for example, on a meter which is calibrated to give a direct reading of the hypohalite ion concentration in the water.

Sensing electrodes employed include those having as a component a porous conductive material. Suitable materials useful as the porous conductive material include graphite, metal compounds, such as tantalum carbide, tungsten carbide, zirconium carbide, niobium carbide, tantalum silicide, tungsten silicide, vanadium silicide, niobium silicide, titanium nitride, zirconium nitride, molybdenum silicide, tantalum boride, titanium boride, zirconium boride, hafnium boride, molybdenum boride, chromium boride, and niobium boride, and sintered metals, for example, iron, steel, copper, nickel, platinum, gold, chromium, and tantalum.

In order to make accurate measurements of the hypohalite ion in the water, extreme cleanliness of the porous electrode surface is required. In the apparatus of FIGURE 2, this is accomplished by the flow of a buffer solution through the porous conductive material. The flow of buffer solution through the porous electrode results in a self-cleaning electrode whose electrode surface enables accurate measurements of the hypohalite ion in the water to be made independent of the pH of the water. Suitable buffer solutions and additional details of this embodiment of the available halogen measuring unit are described in U.S. Patent No. 4,028,197, issued June 7, 1977, to I. A. Capuano, the entire disclosure being incorporated by reference herewith.

Free available halogens produced and measured by the novel process of the present invention are those which form a hypohalite upon reaction with water and include chlorine, bromine, and iodine; with chlorine being the preferred available halogen.

To accurately determine, for example, the free available chlorine concentration in aqueous solutions, (that is the chlorine present as hypochlorous acid or hypochlorites) it is desirable that no potential be applied between the reference electrode and the sensing electrode. Aqueous solutions such as swimming pool water often contain nitrogen-containing substances, such as ammonia, urine or perspiration (urine and perspiration contain the compound urea as one of their components). When aqueous solutions containing these nitrogen-containing substances are treated with free available chlorine, some of the chlorine reacts with the nitrogen atoms of these substances to form compounds broadly classified as "chloramines". Chloramines derived from ammonia or urea are undesirable in aqueous

solutions as they cause unpleasant odors, and in the case of swimming pool waters, cause eye irritation to swimmers. In contrast to free available chlorine, chlorine which is bonded to the nitrogen atoms of a chloramine is referred to as combined available chlorine. An effective way of destroying undesirable chloramines is to react them with an excess of free available chlorine. The application of an electrical potential to an aqueous solution containing chloramines will, in many cases, reduce the combined available chlorine to the chloride ion. A method of measuring free available chlorine which applies a potential to an aqueous solution containing chloramines which is sufficient to reduce the combined available chlorine, will obtain readings for free available chlorine which are inaccurate. Thus it can be seen that the accurate measurement of free available chlorine aqueous solutions by a method in which no potential is applied, will not be effected by the presence of compounds such as chloramines having combined available chlorine.

To measure the concentration of chloramines in aqueous solutions containing free available chlorine, it may be desirable to apply a potential The free available chlorine present in the solution is first determined in the absence of an applied potential A potential is then applied to the electrodes which is sufficient to reduce the combined available chlorine of chloramines to chloride ion and a second measurement is taken. The difference between the two readings represents the combined available chlorine (chloramine) and this information may be used to modify the treatment of the aqueous solution, for example, to destroy the chloramines present.

The above discussion has been presented in terms of chloramines, but halogens such as bromine also react with nitrogen to form bromamines in which the bromine is in the combined available form.

Electric current is transported through control unit 56 to D.C. power source 74 as long as the available halogen concentration falls, for example, below upper limit 25 represented by the setting of the set point on available halogen control unit 56. For example, where tank 50 is a swimming pool and the available halogen is chlorine, it is desirable to maintain a free available chlorine concentration in the range of from about 1 to about 3 parts per million at the water pH range which is normally maintained for swimming pools.

D.C. power source 74 feeds electric current to the anode of electrolytic cell 58 and current is conducted by the electrolyte present to the cathode and electrolysis of the electrolyte takes place.

Suitable electrolytes for producing available halogens or available halogen compounds by electrolysis include aqueous solutions of hydrogen halides or alkali metal halides. Hydrogen halides which may be employed are hydrogen chloride, hydrogen bromide, or hydrogen iodide, with hydrogen chloride being preferred. Electrolysis of an aqueous solution of a hydrogen halide results in the production of a halogen gas and hydrogen gas. The electrolysis is preferably conducted in an electrolytic cell in which the electrodes are not separated by a diaphragm or membrane. If during electrolysis, the hydrogen halide concentration should become depleted, the electrolysis of water takes place. The electrolysis of water results in the excessive production of oxygen which may result in the degradation of the electrodes by oxidation. To minimize the

electrolysis of water upon accidental depletion of the hydrogen halide, an electrode protecting agent such as an alkali metal halide is added to the electrolyte. The electrode protecting agent is employed in amounts suitable to minimize the electrolysis of water while preventing release of substantial amounts of available halogen to the water and, if desired, activating an alarm indicating electrolyte depletion.

Alkali metal chloride solutions which can be electrolyzed, in cells of the type shown in FIGURE 3 or other cells with separators, include alkali metal chlorides such as sodium chloride and potassium chloride and alkali metal bromides includes sodium bromide and potassium bromide. Alkali metal chloride solutions are preferred as electrolytes with sodium chloride being particularly preferred.

Employing the electrolytic cell of FIGURE 3, as a replacement for electrolytic cell 58 in the system of FIGURE 1, a saturated solution of a brine of an alkali metal halide such as an alkali metal chloride or alkali metal bromide is added to anode compartment 82. If preferred, water and a supply of a solid alkali metal halide salt may be added to anode compartment 82 and a saturated brine solution will be formed and continuously replenished until all of the salt is dissolved. Electrolysis of an alkali metal halide brine, for example, an aqueous solution of sodium chloride or potassium chloride, produces chlorine gas in the anode compartment. The chlorine is removed and fed to the circulating water stream, as illustrated in FIGURE 1. Chlorine reacts with the water being recirculated to produce hypochlorous acid and hydrochloric acid according to the reaction represented by equation (2):

$$Cl_2 + H_2O \longrightarrow HOCl + HCl \quad (2)$$

In the membrane cell of FIGURE 3, hydrogen gas and an alkali metal hydroxide are produced in cathode compartment 84. For many water treatment systems, the amount of hydrogen produced is insufficient for recovery and it may be released either directly into the atmosphere or into the circulating water without incident. All or a portion thereof of the alkali metal hydroxide solution produced in the cathode compartment is preferably used to maintain the pH of the treated water within a range of from about 7 to about 8, and preferably in the range of from about 7.2 to about 7.6. As shown in equation (2) above, a mole of hydrochloric acid is produced for each mole of available chlorine as hypochlorous acid. Under conditions where the demand for available chlorine is heavy, the pH of the water being treated is reduced and the addition of a base such as an alkali metal hydroxide or an alkali metal carbonate or bicarbonate is required. Production of the alkali metal hydroxide in an electrolytic cell of the type of FIGURE 3 may satisfy all or the portion of a base required for pH maintenance.

During periods where the use of the swimming pool, hot tub or spa is light and the demand for available halogen is low, the available halogen concentration may reach the predetermined upper level indicated on the control unit. When this occurs, power transmission to D.C. power source 74 is stopped and electrolysis of the brine solution in electrolytic cell 58 is discontinued.

Should the concentration of halide ion in the electrolyte become significantly reduced and the available halogen concentration fall below that indicated by the lower set point on the control unit, an alarm may be activated to indicate the need for

replenishing the hydrogen halide or alkali metal halide concentration. This alarm may be, for example, an audible one such as a horn, siren, or beeper; or a visible indicator.

The novel method and apparatus of the present invention thus produce the available halogen required to sanitize the water supply on the basis of the available halogen demand of the water body being treated. Automatic, continuous control of the sanitizing system is provided which assures the desired concentration of the available halogen at all times, but does not produce the available halogen haphazardly. Substantial energy and cost savings are realized as the electrolysis is only conducted when the available halogen concentration is being depleted.

The following examples are presented to illustrate the invention more fully while not being limited thereby. All parts and percentages are by weight unless otherwise indicated.

EXAMPLE 1

Water from an outdoor swimming pool (13,500 gallon capacity) was recirculated through the system of FIGURE 1 which included an available halogen monitor. The available halogen monitor was regulated by a control unit connected to an A.C. power source. An electrochemical cell having carbon electrodes for electrolyzing an aqueous solution containing 10% HCl and 2% NaCl was connected to a D.C. power source. The D.C. power source was connected to and regulated by the control unit. The pool water was stabilized by the addition of 25 parts per million of cyanuric acid and the pH was maintained in the range of 7.2 to 7.6 by the periodic addition of sodium bicarbonate. Pool water at the rate of 20 gallons per minute was circulated through the available halogen monitor. The monitor employed a porous graphite sensing electrode and a reference electrode. The sensing electrode was kept independent of the pH of the pool water by continuously washing the porous electrode with a buffer solution. The available chlorine concentration of the pool water was recorded on a meter. A relay in the control unit was connected to the meter and to the direct current power source supplying current to the electrolytic cell. Electrolysis of the hydrochloric acid solution produced chlorine gas which was fed through an inlet located between the available halogen monitor and the circulating pump to sanitize the recirculated water.

After an initial break-in period, the set point on the meter was set to maintain the upper limit of the available chlorine concentration at 1.5 parts per million. During the 27 day period of operation, the available chlorine concentration of the pool water was

also determined using the dimethyl-p-phenylene diamine (DPD) colorimetric method. When the available chlorine concentration reached the desired maximum level of 1.5 parts per million, the relay in the control unit cut off electric current to the electrolysis cell. This was visibly seen as the reading on the ammeter dropped to zero. Available chlorine concentration determined by the DPD method and by the available halogen monitor, and current readings during the period of operation are given in Table 1 below.

EXAMPLE 1 shows that the novel method and apparatus of the present invention accurately control the production of available chlorine and accurately maintain the desired level of the sanitizing agent in the pool water. When available halogen is not required, the operation of the electrolytic cell is discontinued, as shown by entries in Table I where the current was off.

TABLE 1

SWIMMING POOL CHLORINATION SYSTEM
USING $Cl_2$ PRODUCED BY ELECTROLYSIS OF HCl

| Day No. | Time | Available Chlorine (PPM): Dimethyl-p-phenylene diamine Determinants | Available Chlorine (PPM): Available Halogen Monitor | Current | Remarks |
|---|---|---|---|---|---|
| 1 | a.m. | 1.3 | 1.4 | 15 amps | |
| 2 | a.m. | 1.4 | 1.4 | 15 amps | |
| 5 | a.m. | 1.0 | 1.4 | 15 amps | |
| 6 | a.m. | 1.6 | 0.9 | 15 amps | Electrode buffer solution low |
| 7 | a.m. | 1.6 | 1.6 | 15 amps | |
| | p.m. | 1.4 | 1.6 | | |
| 8 | a.m. | 1.2 | 1.5 | 15 amps | |
| | p.m. | 1.3 | 1.5 | 6 amps | |
| 9 | a.m. | 1.6 | 1.5 | 7 amps | |
| | p.m. | 1.3 | 1.4 | 10 amps | |
| 12 | a.m. | 1.3 | 1.4 | 15 amps | |
| | p.m. | 1.2 | 1.4 | Off | |
| 13 | a.m. | 1.3 | 1.3 | 18 amps | |
| | p.m. | 1.2 | 1.2 | 15 amps | |
| 14 | a.m. | 1.4 | 1.4 | 14 amps | |

TABLE 1 (cont'd)

| Day No. | Time | Available Chlorine (PPM) Dimethyl-p-phenylene diamine Determinants | Available Chlorine (PPM) Available Halogen Monitor | Current | Remarks |
|---|---|---|---|---|---|
| 15 | a.m. | 1.4 | 1.4 | 14 amps | |
| | p.m. | 1.4 | 1.35 | 16 amps | |
| 16 | a.m. | 1.4 | 1.35 | 15 amps | |
| 19 | a.m. | 1.3 | 1.35 | 17 amps | |
| | p.m. | 1.3 | 1.35 | Off | |
| 20 | a.m. | 1.4 | 1.3 | 18 amps | |
| | p.m. | 1.4 | 1.35 | Off | |
| 21 | a.m. | 1.4 | 1.4 | Off | |
| 22 | a.m. | 1.4 | 1.35 | 17 amps | |
| 23 | a.m. | 1.3 | 1.3 | 18 amps | |
| 26 | p.m. | 1.4 | 1.4 | Off | |
| 27 | a.m. | 1.3 | 1.3 | 15 amps | |

EXAMPLE 2

The electrolytic cell, available halogen monitor and the recirculation system of EXAMPLE 1 were employed in the sanitizing of a 250 gallon hot tub. The hot tub water was maintained at a temperature of 96°F., a pH in the range of 7-7.6 and was stabilized by the addition of about 50 parts per million of cyanuric acid. A portion of the hot water was removed from the tub, passed through the available halogen monitor and the available halogen concentration was determined. The set point on the control unit was positioned at 3 parts per million. When the available chlorine concentration fell below this value, electrolysis of the 15% HCl solution (containing 2% NaCl) in the electrolytic cell produced chlorine gas which was fed to the recirculating water. The gas was introduced through an inlet between the available halogen monitor and the circulating pump on the vacuum side of the circulating pump. The chlorine treated water was passed through a filter and through a heater to maintain the desired temperature. The automatic chlorine production and monitoring system was operated for approximately 4 months and continuously provided the hot tub water with sanitized water having an available chlorine concentration of about 3 parts per million.

EXAMPLE 2 shows that high levels of available chlorine concentration can be produced and accurately maintained under adverse temperature conditions in water supplied to a hot tub.

WHAT IS CLAIMED IS:

1. A method of sanitizing a water body in a container having a recirculation system for continuously recirculating water from and to said container which comprises:

a) contacting an electrochemical available halogen sensor with said recirculating water;
b) measuring said available halogen concentration in said recirculating water;
c) displaying said available halogen concentration on a control means;
d) establishing on said control means a predetermined value for said available halogen concentration;
e) connecting said control means to an electrolysis means for electrolytically producing an available halogen;
f) activating said electrolysis means to produce said available halogen when said measured available halogen concentration is below said predetermined value;
g) adding said available halogen to sanitize said recirculating water; and
h) returning said sanitized recirculating water to said container.

2. The method of claim 1 in which said available halogen is selected from the group consisting of chlorine, bromine, and iodine.

3. The method of claims 1 or 2 in which said available halogen is produced by the electrolysis of an aqueous solution of a halogen compound selected from the group of alkali metal halides, hydrogen halides, and mixtures thereof.

4. The method of claims 1 to 3 in which said water body is selected from the group consisting of swimming pools, hot tubs and spas.

5. The method of claims 3 or 4 in which said halogen compound is a hydrogen halide admixed with an electrode protecting amount of an alkali metal halide.

6. The method of claims 3, 4, or 5 in which said hydrogen halide is hydrogen chloride.

7. The method of any of claims 1 to 6 in which a portion of alkali metal hydroxide is added to said recirculating water for controlling the pH of said water body.

8. Apparatus for sanitizing a water body in a container having a recirculation system means for continuously recirculating water from and to said container, said apparatus which comprises:

a) an electrochemical available halogen sensor adapted to contact said recirculating water to measure the available halogen concentration;

b) control means 56 for said electrochemical available halogen sensor;

c) an indicator means 24 on said control means for displaying said available halogen concentration;

d) means 25,27 for selecting an available halogen concentration limit on said indicator means;

e) electrolysis means 58,80 for electrolytically producing an available halogen, said electrolysis means having connection means 42 to said control means;

f) means 52,54 for feeding said available halogen produced electrolytically into said recirculating system; and

g) means 56 for inactivating said electrolysis means when said available halogen concentration limit has been exceeded.

9. The apparatus of claim 8 in which said electrochemical available halogen sensor comprises a porous self-cleaning sensing electrode 18.

10. The apparatus of claim 9 in which said electrolysis means is an electrolytic membrane cell having an anode compartment 82, a cathode compartment 84 and a cation exchange membrane 83 separating said anode compartment from said cathode compartment for the electrolysis of an aqueous solution of an alkali metal halide.

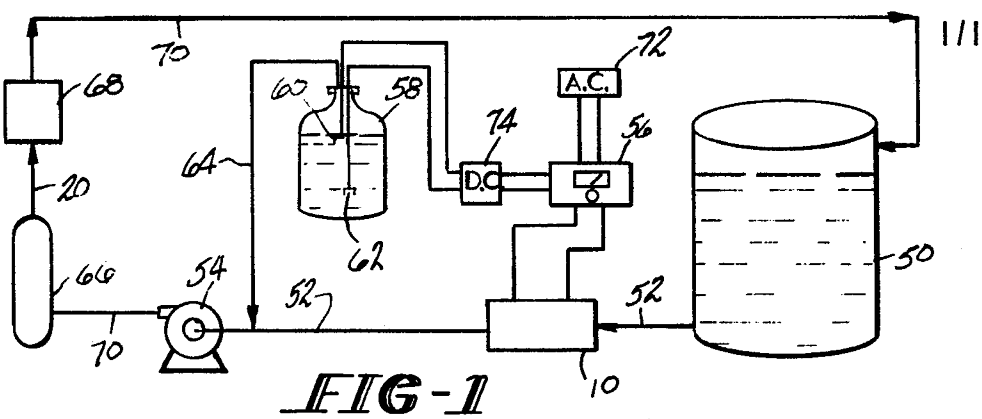


FIG-1

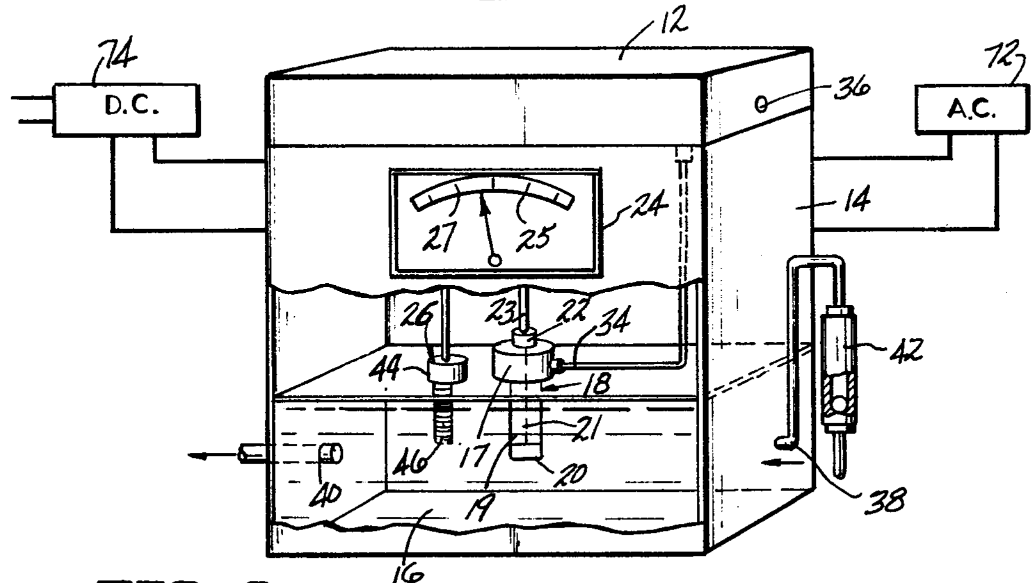


FIG-2

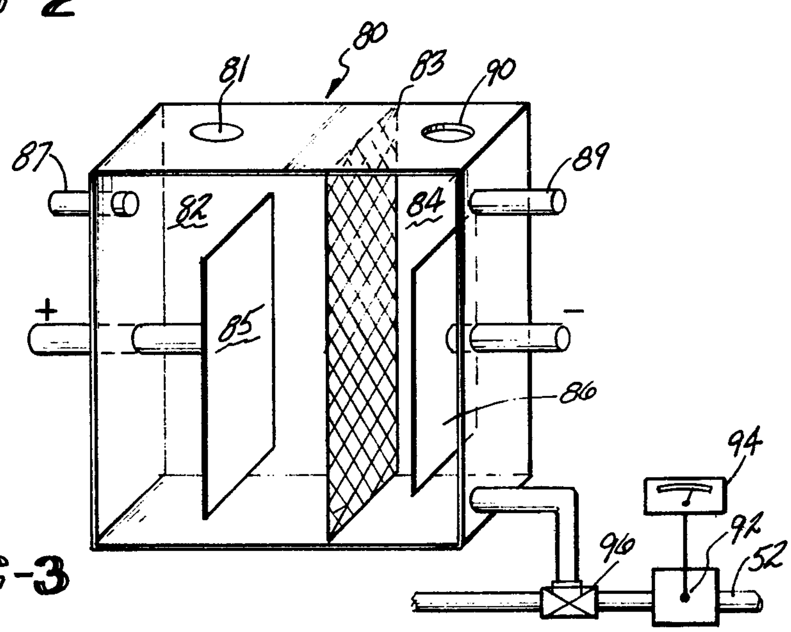


FIG-3

European Patent Office

# EUROPEAN SEARCH REPORT

0133920

Application number

EP 84 10 7787

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 097 356 (D. YATES)<br>* Whole document *<br>--- | 1-10 | C 02 F 1/76<br>C 02 F 1/46 |
| X | GB-A-1 435 503 (INT. RESEARCH & DEVELOPMENT)<br>* Whole document *<br>--- | 1-4,8, 9 | |
| X | DE-A-2 935 124 (A.K. REIS)<br>* Whole document *<br>--- | 1-4,8 | |
| A | DE-B-1 262 168 (O. PAUSER)<br>* Columns 1-3 *<br>--- | 1-4,7-10 | |
| A | DE-A-1 965 160 (AG FÜR HYDROLOGIE)<br>* Whole document *<br>--- | 1-4 | TECHNICAL FIELDS SEARCHED (Int. Cl.4) |
| D,A | US-A-4 381 240 (T.V. RUSSELL)<br>* Whole document *<br>----- | 1-10 | C 02 F |

The present search report has been drawn up for all claims

| Place of search | Date of completion of the search | Examiner |
|---|---|---|
| THE HAGUE | 30-10-1984 | VAN AKOLEYEN H.T.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document